# EUROPEAN PATENT APPLICATION

(11) **EP 1 871 055 A2**
(43) Date of publication of application: **26.12.2007**
(21) Application number: 07011986.2
(22) Date of filing: 19.06.2007
(51) Int. Cl.: H04L 12/56, H04Q 7/38, H04L 1/18

(54) **Method and apparatus for uplink data handling upon handover in a wireless communications system**

(30) Priority: 19.06.2006 US 805097 P
(71) Applicant: Innovative Sonic Limited, Tortola (VG)
(72) Inventor: Jiang, Sam Shiaw-Shiang, Taipei City (TW)
(74) Representative: Hager, Thomas Johannes

(57) **Abstract**

To handle uplink data upon handover of a user equipment from a source base station to a target base station in a wireless communications system, the source base station forwards a message to the target base station (302). The message indicates values of missing sequence numbers and a sequence number of a last received radio link control service data unit.

## Description

This application claims the benefit of the filing date of U.S. Provisional Patent Application No. 60/805,097, filed on June 19, 2006, the contents of which are hereby incorporated by reference.

The present invention relates to a method and related device for handling packets that have not been transmitted successfully upon handover in a wireless communications system according to the pre-characterizing clauses of claims 1, 4, 7, and 8.

In a 3^{rd} generation wireless communications system, description of how outstanding uplink data are handled upon inter-evolved Node B, hereafter eNB, handover is given in Section 9.1.7 of 3GPP TR 25.813 (2006-06), "Evolved Universal Terrestrial Radio Access (E-UTRA) and Evolved Universal Terrestrial Radio Access Network (E-UTRAN) Radio Interface Protocol Aspects". During handover, all successfully received uplink radio link control, hereafter RLC, service data units, hereafter SDUs, are forwarded to an access gateway, hereafter aGW, by a source eNB, and the source eNB discards remaining uplink RLC PDUs. A user equipment, hereafter UE, then retransmits the uplink RLC SDUs that are not yet successfully received by the source eNB. The source eNB does not forward the uplink RLC SDUs or the uplink RLC context to the target eNB.

In other words, upon handover, the RLC entity in UTRAN is reestablished. Thus, all status variables are reset to their initial values, and a sequence number, hereafter SN, of an RLC PDU that is to be transmitted first is reset to zero, as are the SNs of an RLC PDU that is expected to be received next. The handover procedure described above functions properly when the RLC entity and the RLC re-establishment procedure described in 3GPP TR 25.322 V7.0.0, "RLC protocol specification (Release 7)" are used. However, in a long term evolution, hereafter LTE, a packet data convergence protocol, hereafter PDCP, entity, which is an upper layer of the RLC entity, must provide a PDCP SN for each packet, i.e. RLC SDU, to facilitate ciphering. The RLC entity can use the PDCP SN to perform re-ordering, duplication detection, flow control, and automatic repeat request, hereafter ARQ, functions. Thus, it is possible that the RLC header of an RLC PDU will not have an extra RLC SN field, so as to reduce protocol overhead. If there is no RLC SN field in the RLC PDU header, for example, when the PDCP SN is used for the ARQ functions in the RLC entity, the PDCP SN cannot be reset by the RLC entity. Thus, during the handover procedure described above, problems and inefficiencies may occur due to missing RLC PDUs.

This in mind, the present invention aims at providing a method and related device for handling packets that have not been transmitted successfully upon handover in a wireless communications system that increases efficiency during handover.

This is achieved by a method and related device for handling packets that have not been transmitted successfully upon handover in a wireless communications system according to claims 1, 4, 7, and 8. The dependent claims pertain to corresponding further developments and improvements.

As will be seen more clearly from the detailed description following below, the claimed method and related device for handling packets that have not been transmitted successfully upon handover in a wireless communications system includes sending a message from a source base station to a target base station that indicates values of missing sequence numbers and a sequence number of a last received radio link control service data unit.

In the following, the invention is further illustrated by way of example, taking reference to the accompanying drawings. Thereof
Fig. 1 is a function block diagram of a wireless communications device,
Fig. 2 is a diagram of program code of Fig. 1,
Fig. 3 is a flowchart of a process according to a first embodiment of the present invention, and
Fig. 4 is a flowchart of a process according to a second embodiment of the present invention.

3GPP radio-access technology is poised for continued competitiveness in years to come with such enhancements as high-speed downlink protocol access (HSDPA) and Enhanced Uplink. In the long term, competitiveness is assured through what is called a "long-term evolution" (LTE) of the 3GPP radio-access technology. According to 3GPP TR 25.813 V1.0.1 (2006-06), "Evolved Universal Terrestrial Radio Access (E-UTRA) and Evolved Universal Terrestrial Radio Access Network (E-UTRAN) Radio Interface Protocol Aspects," hereafter "3GPP TR 25.813," the LTE includes important advances such as, "reduced latency, higher user data rates, optimised support for packet services, improved system capacity and coverage, and reduced cost for the operator, while also reducing system complexity."

One example of a problem that may occur upon handover is described as follows. During data transmission on the uplink, i.e. from the UE to the eNB in the LTE system, suppose that PDCP SN = 0, 1, 2, 3, 4, 5, ..., 20 have been transmitted on the uplink before a handover occurs. Upon handover, all the RLC PDUs have been received successfully, and the source eNB has positively acknowledged all of the RLC PDUs except for PDCP SN = 2 and 3. Using the above-described procedure, the UE transmits PDCP SN = 2 and 3, then transmits PDCP SN = 21, 22, 23, and so forth. Because "the source eNB neither forwards uplink RLC SDUs nor the uplink RLC context to the target eNB," the target eNB has no information about the uplink RLC context. Namely, the target eNB does not know that PDCP SN = 4 to 20 have been received successfully. Thus, the target eNB will request retransmission by sending a status report indicating that PDCP SN = 4 to 20 are missing. In the meanwhile, the RLC SDUs with PDCP SN greater than 20 are held in the buffer. Further, the UE may have discarded the RLC SDUs with PDCP SN = 4 to 20, because the source eNB already positively acknowledged them before the handover procedure. Thus, it is impossible for the UE to retransmit PDCP SN = 4 to 20 as the target eNB requests. So, in addition to unnecessary ARQ signaling sent by the target eNB, which wastes radio resources, and data latency that is deteriorated for received RLC SDUs, data transmission may be stalled because the UE cannot fulfill the transmission request made by the target eNB.

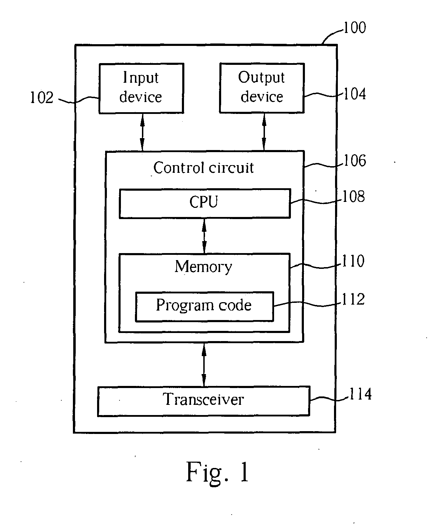

Please refer to Fig. 1, which is a function block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

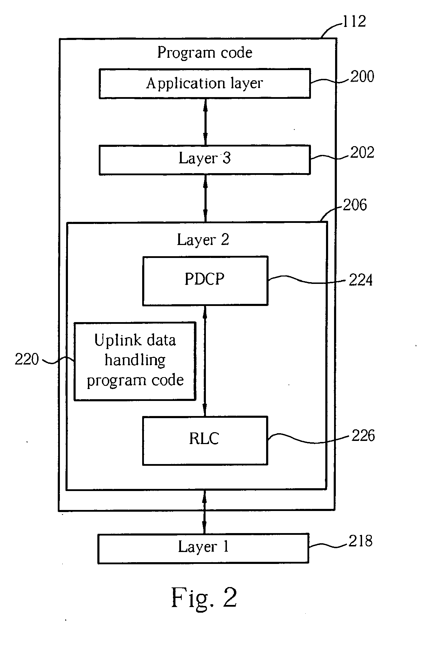

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 226 and a packet data convergence protocol (PDCP) entity 224. The PDCP entity 224 is an upper layer to the RLC entity 226. Primary functions of the RLC entity 226 include segmentation, reassembly, concatenation, padding, retransmission, sequence check, and duplication detection on transmitted data or control instructions based on different transmission quality requirements. The PDCP entity 224 is primarily responsible for compression/decompression of headers, transfer of user data, ciphering and maintenance of PDCP sequence numbers.

In LTE, the PDCP entity 224 must provide a PDCP SN for each packet, i.e. for each RLC SDU, to facilitate ciphering functionality. The RLC entity 226 can use the PDCP SNs when performing re-ordering, duplication detection, flow control, and ARQ functionalities. Thus, it is possible that there is no extra RLC SN field in the RLC header of a RLC PDU to reduce protocol overhead. To increase efficiency during handover, the program code 112 comprises a uplink data handling program code 220.

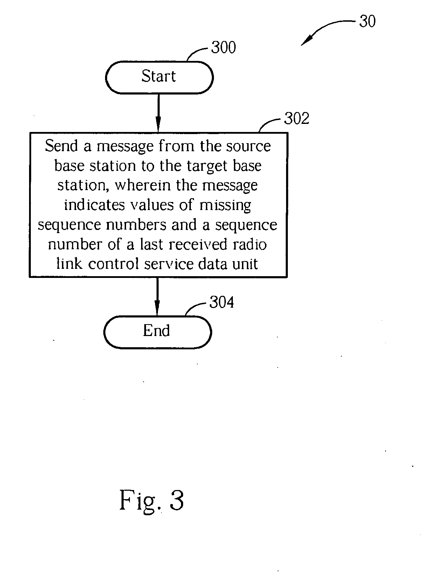

Please refer to Fig. 3, which is a flowchart of a process 30 according to a first embodiment of the present invention. The process 30 is utilized for uplink data handling upon handover in the wireless communications system, and can be complied into the uplink data handling program code 220. The process 30 comprises the following steps:
Step 300: Start.
Step 302: Send a message from the source base station to the target base station, wherein the message indicates values of missing sequence numbers and a sequence number of a last received radio link control service data unit.
Step 304: End.

According to the process 30, for uplink upon handover, the values of the missing SNs and the SN of the last received RLC SDU are sent from the source base station to the target base station. In the example described above, PDCP SN = 2 and 3, i.e. the missing SNs, and PDCP = 20, i.e. the last received RLC SDU, would be sent to the target base station upon handover. The process 30 could further comprise the target base station recovering the receiving window and receiving status of the source base station upon handover. In the process 30, the RLC entity of the target base station preferably supports out-of-sequence delivery to its upper layer.

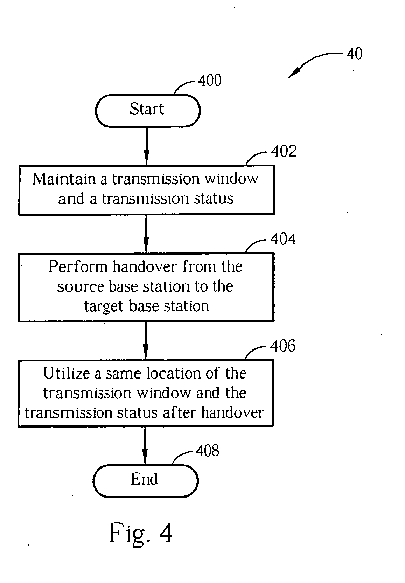

Please refer to Fig. 4, which is a flowchart of a process 40 according to a second embodiment of the present invention. The process 40 is utilized for handling uplink data upon handover from a source base station to a target base station in the wireless communications system, and can be complied into the uplink data handling program code 220. The process 40 comprises the following steps:
Step 400: Start.
Step 402: Maintain a transmission window and a transmission status
Step 404: Perform handover from the source base station to the target base station.
Step 406: Utilize a same location of the transmission window and the transmission status after handover.
Step 408: End.

In the process 40, for uplink, the transmission window of the UE is not reset upon and after handover.

In summary, the present invention forwards missing sequence numbers and the sequence number of the last received RLC SDUs from the source base station to the target base station. Compared to the prior art, the present invention is more efficient.

## Claims

1. A method of uplink data handling upon handover of a user equipment from a source base station to a target base station in a wireless system, the method comprising:
sending a message from the source base station to the target base station (302),
**characterized in that** the message indicates values of missing sequence numbers and a sequence number of a last received radio link control service data unit.

2. The method of claim 1 **characterized by** the target base station recovering a receiving window and a receiving status of the source base station upon handover.

3. The method of claim 1, **characterized in that** a radio link control entity of the target base station supports out-of-sequence delivery to its upper layer.

4. A communications device (100) of a wireless communications system utilized for uplink data handling upon handover of a user equipment from a source base station to a target base station, the communications device comprising:
a control circuit (106) for realizing functions of the communications device;
a central processing unit (108) installed in the control circuit for executing program codes to operate the control circuit; and
a memory (110) coupled to the central processing unit and comprising:
program code executed for the communications device to perform a first function of the source base station (302); and
program code executed for the first function to send a message to the target base station,
**characterized in that** the message indicates values of missing sequence numbers and a sequence number of a last received radio link control service data unit.

5. The communications device (100) of claim 4, **characterized in that** the memory (110) further comprises:
program code executed for the communications device (100) to perform a second function of the target base station;
program code executed for the second function to receive a message from the source base station, wherein the message indicates values of missing sequence numbers and a sequence number of a last received radio link control service data unit; and
program code executed for the second function to recover a receiving window and a receiving status of the source base station upon handover from the message.

6. The communications device (100) of claim 4, wherein the memory (110) further comprises:
program code executed for the communications device (100) to perform a third function of the target base station; and
program code executed for the third function to support out-of-sequence delivery to its upper layer.

7. A method of handling uplink data by a user equipment upon handover from a source base station to a target base station in a wireless communications system, the method comprising:
maintaining a transmission window and a transmission status (402);
performing handover from the source base station to the target base station (404); and
**characterized by** utilizing a same location of the transmission window and the transmission status after handover (406).

8. A communications device (100) of a wireless communications system utilized for handling uplink data upon handover from a source base station to a target base station in a wireless communications system, the communications device comprising:
a control circuit (106) for realizing functions of the communications device;
a central processing unit (108) installed in the control circuit for executing program codes to operate the control circuit; and
a memory (110) coupled to the central processing unit and comprising:
program code executed for maintaining a transmission window and a transmission status (402);
program code executed for performing handover from the source base station to the target base station (404); and
**characterized in that** the memory (110) further comprises program code executed for utilizing a same location of the transmission window and the transmission status after handover (406).
